Europäisches Patentamt

European Patent Office

Office européen des brevets

(11) Veröffentlichungsnummer: **0 405 571 A1**

# (12) EUROPÄISCHE PATENTANMELDUNG

(21) Anmeldenummer: 90112431.3

(22) Anmeldetag: 29.06.90

(51) Int. Cl.⁵: **C02F 3/32**

(30) Priorität: 29.06.89 DE 3921241

(43) Veröffentlichungstag der Anmeldung:
02.01.91 Patentblatt 91/01

(84) Benannte Vertragsstaaten:
AT BE CH DE DK ES FR GB GR IT LI LU NL SE

(71) Anmelder: Rogmans, Maria
Viktorstrasse 14
D-4232 Xanten(DE)

Anmelder: Wilhelm, Hermann-Josef
Viktorstrasse 14
D-4232 Xanten(DE)

(72) Erfinder: Rogmans, Maria
Viktorstrasse 14
D-4232 Xanten(DE)
Erfinder: Wilhelm, Hermann-Josef
Viktorstrasse 14
D-4232 Xanten(DE)

(54) Verfahren zum Entsorgen von Gülle.

(57) Es wird ein Verfahren zum Entsorgen von Gülle beschrieben, wobei durch Verdünnen von Gülle mit Wasser eine Nährlösung hergestellt wird, wobei in der Nährlösung Pflanzen gehalten werden, die die in der Gülle enthaltenen Schadstoffe, insbesondere Nitrate, Nitrite, Phosphate und Kalzium aufnehmen und als verbrauchte Nährlösung im wesentlichen Wasser zurückgeben und deren Wurzeln in die Nährlösung ragen, und wobei, nachdem diese Pflanzen die Schadstoffe aus der Gülle aufgenommen und Wasser zurückgelassen haben, dieses Wasser durch frische Nährlösung ersetzt wird.

Fig.:1

## VERFAHREN ZUM ENTSORGEN VON GÜLLE

Die Erfindung betrifft ein Verfahren zum Entsorgen von Gülle.

Die in der Gülle enthaltenen wesentlichen Schadstoffe sind Nitrate, Nitrite, Phosphate und Kalzium. Darüberhinaus sind in Gülle auch Ammoniak, Spurenelemente und Wasser enthalten.

Bei der intensiven Viehwirtschaft fällt mehr Gülle an, als zur Düngung von Äckern und Wiesen erforderlich ist. Das führte in der Vergangenheit dazu, daß die landwirtschaftlich genutzten Flächen, insbesondere Äcker und Wiesen mit Gülle überdüngt worden sind. Das hat zur Folge, daß die in der Gülle enthaltenen Schadstoffe ins Grundwasser gelangen und das Grundwasser dadurch verunreinigt wird.

Der Erfindung liegt die Aufgabe zugrunde, ein Verfahren zum Entsorgen von Gülle anzugeben, mit dem es möglich ist, die Umweltbelastungen durch Nitrate, Nitrite, Phosphate und Kalzium zu verringern, wobei gleichzeitig hochwertiges Viehfutter erzeugt wird.

Diese Aufgabe wird erfindungsgemäß dadurch gelöst,

a) daß durch Verdünnen von Gülle mit Wasser eine Nährlösung hergestellt wird,

b) daß in der Nährlösung Pflanzen gehalten werden, die die in der Gülle enthaltenen Schadstoffe, insbesondere Nitrate, Nitrite, Phosphate und Kalzium aufnehmen und als verbrauchte Nährlösung im wesentlichen Wasser zurückgeben und deren Wurzeln in die Nährlösung ragen,

c) und daß, nachdem diese Pflanzen die Schadstoffe aus der Gülle aufgenommen und Wasser zurückgelassen haben, dieses Wasser durch frische Nährlösug ersetzt wird.

Durch die Verdünnung der Gülle ist sichergestellt, daß die mit der Gülle in Berührung kommenden Pflanzen nicht verbrennen.

Es sind Pflanzen bekannt, die aus einer mit Wasser stark verdüngten Gülle bzw. aus einer derartigen Nährlösung die in der Nährlösung enthaltenen Schadstoffe entnehmen und im wesentlichen Wasser zurücklassen. Diese Eigenschaften solcher Pflanzen werden erfindungsgemäß dazu benutzt, aus der Gülle die darin enthaltenen Schadstoffe zu entnehmen und eine verbrauchte Nährlösung bzw. eine Flüssigkeit zurückzulassen, die im wesentlichen aus Wasser besteht.

Wenn die Pflanzen lange genug in dieser Nährlösung gestanden haben, ist es erforderlich, die verbrauchte Nährlösung, in der für das Wachstum der Pflanzen nicht mehr genügend Nährstoffe enthalten sind, durch eine frische Nährlösung zu ersetzen.

Auf diese Weise gelangt man zu einem Verfahren zum Entsorgen von Gülle, mit dem zusätzlich noch erreicht wird, daß die zur Gülleentsorgung benutzten Pflanzen ein hochwertiges eiweißhaltiges Viehfutter abgeben. Dieses Viehfutter kann als Frischfutter, oder als Silage im gegorenen Zustand oder als Trockenfutter als Pillets verfüttert werden.

Zweckmäßig wird die Nährlösung aus einem Gülle-Wasser-Gemisch hergestellt, das eine Güllekonzentration von etwa 10 bis 90% aufweist. Die Nährlösung kann beheizt werden.

Es empfiehlt sich, die Pflanze Beinwell in der Nährlösung in Hydroponickultur oder in Hydrokultur und auf einem Gitter oder dgl. so zu halten, daß nur die Wurzeln des Beinwell in die Nährlösung hineinragen.

Außerdem kann zweckmäßig eine der Pflanzen Entengrüze, Wasserhyazinthe und Schwimmfarn auf der Nährlösung schwimmend gehalten werden, wobei nur die Wurzeln dieser Pflanzen in die Nährlösung hineinragen.

Um festzustellen, wann die Nährlösung verbraucht ist, kann eine von der Konzentration der in der Nährlösung enthaltenen Schadstoffe abhängige Größe gemessen werden und bei Erreichen einer Mindestkonzentration der verbrauchten Nährlösung diese durch frische Nährlösung ersetzt werden.

Der Gülle werden zweckmäßig Melasse und Sauerstoff zur Anregung des Wachstums der in der Gülle enthaltenen Bakterien und zur Gewinnung von Wärme beigemischt. Die in der Gülle entstehende Wärme wird für die Beheizung der Nährlösung und für allgemeine Raumbeheizung verwendet.

Die verbrauchte Nährlösung kann in einer Kläranlage gefiltert werden und das die Kläranlage verlassende gereinigte Wasser für die Feldbewässerung benutzt oder als Brauchwasser für Toiletten oder dgl. verwendet werden.

Zweckmäßig wird die Kläranlage als Biokläranlage, insbesondere als Biotop zur Jungpflanzenanzucht betrieben.

Die Erfindung betrifft auch eine Anlage zum Entsorgen von Gülle, insbesondere zur Durchführung des Verfahrens nach Anspruch 1.

Zu Lösung der der Erfindung zugrunde liegenden Aufgabe ist die Anlage gekennzeichnet durch

a) einen Gülletank für die Aufnahme unverdünnter Gülle,

b) eine Mischanlage für die Herstellung einer Nährlösung aus Gülle und Wasser,

c) ein Gewächshaus für solche Pflanzen, die die in der Gülle enthaltenen Schadstoffe, insbesondere Nitrate, Nitrite, Phosphate und Kalzium aufnehmen und als verbrauchte Nährlösung im wesentlichen Wasser zurücklassen,
d) die Anordnung einer Vielzahl gleicher Beete in dem Gewächshaus für diese Pflanzen und
e) die Anordnung eines Rohrleitungssystems zum Zuführen frischer Nährlösung in die Beete und zum Abführen von verbrauchter Nährlösung im wesentlichen als Wasser aus den Beeten.

Auf diese Weise gelangt man zu einer Anlage, mit der eine Gülleentsorgung ohne weiteres möglich ist. Hinzu kommt, daß zusätzlich ein hochwertiges Viehfutter anfällt.

In dem Gewächshaus sind vorteilhafterweise wenigstens ein Zufuhrrohrstrang für die frische Nährlösung, von dem aus Zulaufrohre für die Beete abzweigen, und wenigstens ein Abfuhrrohrstrang für die verbrauchte Nährlösung vorgesehen, zu dem Ablaufrohre aus den Beeten führen.

Um aus der unverdünnten Gülle die Nährlösung herzustellen, empfiehlt es sich, daß von dem Gülletank aus eine Rohrleitung zu der Mischanlage führt und die Mischanlage über eine weitere Rohrleitung mit dem Zufuhrrohrstrang des Gewächshauses in Verbindung steht.

Am Ende des Abfuhrrohrstranges kann eine Kläranlage vorgesehen sein, um weitere Verunreinigungen aus der verbrauchten Nährlösung zu entfernen. Die Kläranlage kann als Biokläranlage, insbesondere als Biotop zur Jungpflanzenanzucht ausgebildet sein.

Um die Gülle zu erwärmen, kann ein Sauerstofftank vorgesehen sein, von dem aus eine Rohrleitung zu einer in dem Gülletank angeordneten Rohrschlange führt, die mit Austrittsöffnungen für den Austritt des Sauerstoffs in die Gülle versehen ist.

Zweckmäßig öffnen die Austrittsöffnungen in der Rohrschlange nur nach außen hin, somit in Richtung in die Gülle, in umgekehrter Richtung jedoch schließen sie. Damit ist sichergestellt, daß keine Gülle in den Sauerstoff gelangt.

Zur Nutzung der Wärme der Gülle empfiehlt es sich, daß in dem Gülletank ein wasserdurchflossener Wärmeaustauscher vorgesehen ist und das erhitzte Wasser über wenigstens ein Heizungsrohr in das Gewächshaus geführt ist und daß von dem Heizungsrohr aus Abzweigrohre für die Beheizung der Nährlösung in den Beeten vorgesehen sind.

Die einzelnen Beete können innerhalb des Gewächshauses in Etagen übereinander angeordnet sein.

Des weiteren empfiehlt es sich, die Becken zu beleuchten, damit die Pflanzen gut assimilieren können.

Außerdem können auf dem Dach des Gewächshauses Solarzellen angeordnet sein, um hierdurch die erforderliche Energie bzw. zumindest einen Teil der notwendigen Energie zu gewinnen.

Die Erfindung wird nachfolgend anhand eines Ausführungsbeispieles des näheren erläutert. Es zeigt

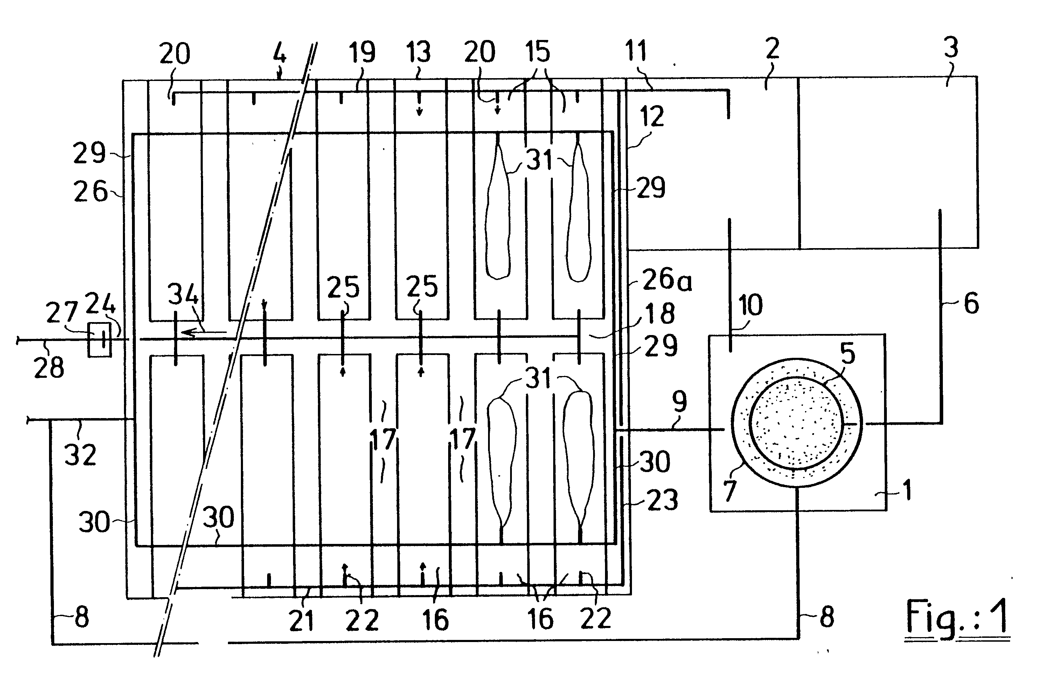

Fig. 1 eine Draufsicht auf die erfindungsgemäß ausgebildete Anlage und

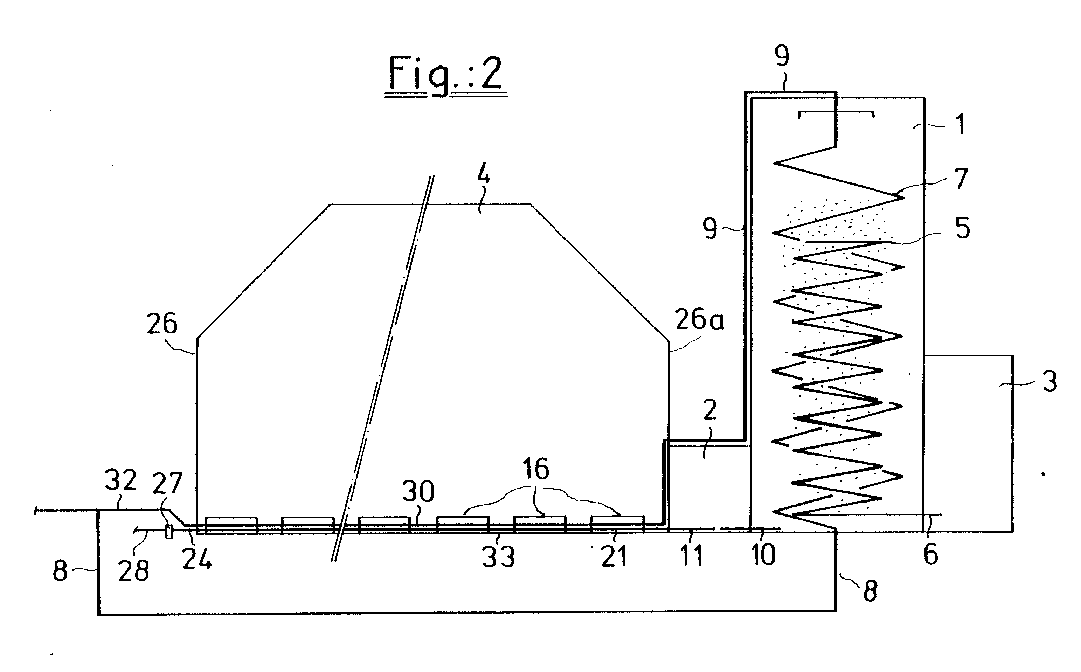

Fig. 2 eine Ansicht auf Figur 1.

Die in der Zeichnung dargestellte Anlage dient zum Entsorgen von Gülle. Diese Anlage hat einen Gülletank 1, eine Mischanlage 2, einen Sauerstofftank 3 und ein Gewächshaus 4.

In dem Gülletank 1 ist eine Rohrschlange 5 angeordnet, in der eine Vielzahl von in der Zeichnung im einzelnen nicht dargestellten Austrittsöffnungen vorgesehen ist und die über eine Leitung 6 mit dem Sauerstofftank verbunden ist. Des weiteren ist in dem Gülletank 1 ein Wärmetauscher in Form einer Rohrschlange 7 angeordnet, die am unteren Ende des Gülletanks 1 mit einer Kaltwasserleitung 8 und am oberen Ende des Gülletanks 1 mit einer Warmwasserleitung 9 verbunden ist.

Von dem Gülletank 1 führt eine Gülleleitung 10 zu der Mischanlage 2, von der aus eine Nährlösungsleitung 11 durch die Stirnwand 12 des Gewächshauses 4 in das Gewächshaus 4 führt. In dem Gewächshaus 4 sind an den Längsseiten 13 und 14 zwei Reihen von Beeten 15 und 16 so angeordnet, daß zwischen den einzelnen Beeten 15 und 16 Quergänge 17 und in der Mitte des Gewächshauses 4 ein Längsgang 18 zum Begehen des Gewächshauses 4 und zum Bearbeiten der einzelnen Beete 15 und 16.

Entlang der einen Längsseite 13 des Gewächshauses 4 ist ein Zufuhrrohrstrang 19 für die Nährlösung vorgesehen, von dem aus je Beet 15,16 ein Zulaufrohr 20 vorgesehen ist. Desgleichen ist an der gegenüberliegenden Seitenwand 14 ein Zufuhrrohrstrang 21 vorgesehen, von dem aus je Beet 16 Zulaufrohre 22 abzweigen. Die beiden Zufuhrrohrstränge 19 und 21 sind durch eine Verbindungsleitung 23 miteinander verbunden.

Im Bereich des Mittelganges 18 ist ein Ablaufrohrstrang 24 vorgesehen, von dem aus je Beet 15,16 ein Ablaufrohr 25 vorgesehen ist. Der Ablaufrohrstrang 24 ist durch die Stirnwand 26 des Gewächshauses 4 nach außen geführt. Außerhalb des Gewächshauses 4 mündet der Ablaufrohrstrang 24 in eine Kläranlage 27, von der aus eine Brauchwasser-Leitung 28 abführt.

Die Warmwasserleitung 9 ist durch die Stirnwand 26a des Gewächshauses 4 in das Innere des Gewächshauses 4 geführt. Hinter der Stirnwand 26a teilt sich die Warmwasserleitung 9 in zwei parallel zueinander geführte Heizungsrohre 29 und 30. Von den beiden Heizungsrohren 29 und 30 zweigen je Beet 15 und 16 im Kreis geführte Abzweigrohre 31 ab. Am Ende des Gewächshauses 4 zweigt von den beiden Heizrohren 29 und 30 ein weiteres Rohr 32 ab. Von dem Rohr 32 aus zweigt die Kaltwasserleitung 8 ab.

Die üblichen Absperrorgane in Form von Ventilen, Schiebern und dgl. sind in der Zeichnung im einzelnen nicht dargestellt.

In der in der Zeichnung dargestellten Ausführungsform sind die Beete 15,16 mit den diese versorgenden Einrichtungen auf dem Boden 33 des Gewächshauses 4 dargestellt. Darüberhinaus ist es ohne weiteres möglich und auch zweckmäßig, die Beete 15,16 in mehreren Etagen übereinander anzuordnen und diese zu beleuchten, damit die in den Beeten wachsenden Pflanzen assimilieren können. Auf dem Dach des Gewächshauses 4 können in ebenfalls nicht näher dargestellter Weise Solarzellen vorgesehen sein.

Der Gülletank 1 enthält Gülle, der etwa 1% Melasse beigemischt ist. Melasse ist ein Abfallprodukt aus der Zuckerrübenverarbeitung. Durch Beimischen von Melasse zu der · Gülle wird das Wachstum der in der Gülle enthaltenen Bakterien angeregt. Aus dem Güllebehälter 1 wird die Gülle über die Leitung 10 in die Mischanlage 2 gefördert, in der die Gülle durch Beimischen von Wasser stark verdünnt wird. Zweckmäßig wird die Gülle auf 10% verdünnt, so daß die in der Mischanlage 2 hergestellte Nährlösung aus etwa 10% Gülle und etwa 90% Wasser und einem geringfügigen Anteil an Melasse besteht. Diese Nährlösung wird durch das Rohr 11 in den Zufuhrstrang 19 und über die Verbindungsleitung 23 in den Zufuhrstrang 21 gefördert. Durch die Zulaufrohre 20 und 22 fließt die Nährlösung in die Beete 15,16. Am anderen Ende der Beete 15,16 fließt die verbrauchte Nährlösung in Form von Wasser durch die Ablaufrohre 25 in den Abfuhrstrang 24. Von hieraus fließt die verbrauchte Nährlösung in Richtung der Pfeile 34 in die Kläranlage 27 und gelangt von hieraus in die Brauchwas ser-Leitung 28.

Über die Leitung 6 wird aus dem Sauerstofftank 3 Sauerstoff in die Rohrschlange 5 gefördert, wobei der Sauerstoff durch die in der Rohrleitung 5 befindlichen Austrittsöffnungen in die in dem Gülletank 1 befindliche Gülle eintritt. Hierdurch wird die Gülle aufgeheizt.

Außerdem ist in dem Gülletank 1 ein Wärmetauscher in Form einer Rohrschlange 7 vorgesehen, der von Wasser durchflossen ist. Das durch die Kaltwasserleitung 8 in die Rohrschlange 7 eintretende kalte Wasser wird innerhalb der Rohrschlange 7 aufgeheizt und verläßt den Gülletank 1 an seinem oberen Ende und fließt durch die Warmwasserleitung 9 in die Heizungsrohre 29 und 30 innerhalb des Gewächshauses 4. Von den Heizrohren 29 und 30 aus durchfließt das heiße Wasser die Abzweigrohre 31, wodurch die in den Beeten 15,16 befindliche Nährlösung aufgeheizt wird.

Am Ende des Gewächshauses 4 münden die beiden Heizungsrohre 29 und 30 in die Leitung 32. Von hieraus kann die in dem Wasser enthaltene Restwärme zur Beheizung von Wohnhäusern, Büros und dgl. benutzt werden. Es ist auch möglich, daß dieses Wasser über die Kaltwasserleitung 8 wieder in die Heizschlange 7 transportiert wird, so daß dieses Wasser in dem Gülletank 1 erneut aufgeheizt wird.

Das in der Kläranlage 27 gereinigte Wasser kann über die Brauchwasserleitung zur Feldbewässerung oder als Brauchwasser für Toiletten und dgl. benutzt werden.

In den Beeten 15,16 wird Beinwell in Hydroponickultur oder in Hydrokultur und auf Gittern derart gehalten, daß die Wurzeln des Beinwell in die Nährlösung hineinragen. Es ist auch möglich, auf der Gülle Entengrüze, Wasser hyazinthe oder Schwimmfarn schwimmend vorzusehen. Diese Pflanzen entnehmen der Nährlösung die in der Gülle enthaltenen Schadstoffe, insbesondere Nitrate, Nitrite, Phosphate und Kalzium. Nach einer bestimmten Zeit sind diese Schadstoffe von den Pflanzen aufgenommen worden, so daß in den Beeten 15,16 Wasser mit Spurenelementen aus der Gülle zurückbleibt.

Dieses Wasser wird in der Kläranlage 27 gereinigt, so daß das aus der Kläranlage 27 durch die Brauchwasserleitung 28 heraustretende gereinigte Wasser zur Feldbewässerung und als Brauchwasser benutzt werden kann.

## Ansprüche

1. Verfahren zum Entsorgen von Gülle,
**dadurch gekennzeichnet,**
a) daß durch Verdünnen von Gülle mit Wasser eine Nährlösung hergestellt wird,
b) daß in der Nährlösung Pflanzen gehalten werden, die die in der Gülle enthaltenen Schadstoffe, insbesondere Nitrate, Nitrite, Phosphate und Kalzium aufnehmen und als verbrauchte Nährlösung im wesentlichen Wasser zurückgeben und deren Wurzeln in die Nährlösung ragen,
c) und daß, nachdem diese Pflanzen die Schadstoffe aus der Gülle aufgenommen und Wasser zurückgelassen haben, dieses Wasser durch frische Nährlösug ersetzt wird.

2. Verfahren nach Anspruch 1, dadurch gekennzeichnet, daß die Nährlösung aus einem Gülle-Wasser-Gemisch hergestellt wird, das eine Güllekonzentration von etwa 10 bis 90% aufweist.

3. Verfahren nach Anspruch 1 oder 2, dadurch gekennzeichnet, daß die Nährlösung beheizt wird.

4. Verfahren nach wenigstens einem der Ansprüche 1 bis 3, dadurch gekennzeichnet, daß die Pflanze Beinwell in der Nährlösung in Hydroponikkultur oder in Hydrokultur und auf einem Gitter oder dgl. so gehalten wird, daß nur die Wurzeln des Beinwell in die Nährlösung hineinragen.

5. Verfahren nach wenigstens einem der vorhergehenden Ansprüche, dadurch gekennzeichnet, daß eine der Pflanzen Entengrüze, Wasserhyazinthe und Schwimmfarn auf der Nährlösung schwimmend gehalten wird und nur die Wurzeln dieser Pflanzen in die Nährlösung hineinragen.

6..Verfahren nach wenigstens einem der vorhergehenden Ansprüche, dadurch gekennzeichnet, daß eine von der Konzentration der in der Nährlösung enthaltenen Schadstoffe abhängige Größe gemessen wird und bei Erreichen einer Mindestkonzentration der verbrauchten Nährlösung diese durch frische Nährlösung ersetzt wird.

7. Verfahren nach wenigstens einem der vorhergehenden Ansprüche, dadurch gekennzeichnet, daß der Gülle Melasse und Sauerstoff zur Anregung des Wachstums der in der Gülle enthaltenen Bakterien und zur Gewinnung von Wärme beigemischt werden.

8. Verfahren nach wenigstens einem der vorhergehenden Ansprüche, dadurch gekennzeichnet, daß die in der Gülle entstehende Wärme für die Beheizung der Nährlösung und für allgemeine Raumbeheizung verwendet wird.

9. Verfahren nach wenigstens einem der vorhergehenden Ansprüche, dadurch gekennzeichnet, daß die verbrauchte Nährlösung in einer Kläranlage gefiltert wird und daß die Kläranlage verlassende gereinigte Wasser für die Feldbewässerung benutzt oder als Brauchwasser für Toiletten oder dgl. verwendet wird.

10. Verfahren nach wenigstens einem der vorhergehenden Ansprüche, dadurch gekennzeichnet, daß die Kläranlage als Biokläranlage, insbesondere als Biotop zur Jungpflanzenanzucht betrieben wird.

11. Anlage zum Entsorgen von Gülle, insbesondere zur Durchführung des Verfahrens nach Anspruch 1, **gekennzeichnet durch**

a) einen Gülletank (1) für die Aufnahme unverdünnter Gülle,

b) eine Mischanlage (2) für die Herstellung einer Nährlösung aus Gülle und Wasser,

c) ein Gewächshaus (4) für solche Pflanzen, die die in der Gülle enthaltenen Schadstoffe, insbesondere Nitrate, Nitrite, Phosphate und Kalzium aufnehmen und als verbrauchte Nährlösung im wesentlichen Wasser zurücklassen,

d) die Anordnung einer Vielzahl gleicher Beete (15,16) in dem Gewächshaus (4) für diese Pflanzen und

e) die Anordnung eines Rohrleitungssystems (19,21,24) zum Zuführen frischer Nährlösung in die Beete (15,16) und zum Abführen von verbrauchter Nährlösung im wesentlichen als Wasser aus den Beeten (15,16).

12. Anlage nach Anspruch 11, dadurch gekennzeichnet, daß in dem Gewächshaus (4) wenigstens ein Zufuhrrohrstrang (19) für die frische Nährlösung vorgesehen ist, von dem aus Zulaufrohre (20) für die Beete (15,16) abzweigen, und daß wenigstens ein Abfuhrrohrstrang (24) für die verbrauchte Nährlösung vorgesehen ist, zu dem Ablaufrohre (25) aus den Beeten führen.

13. Anlage nach Anspruch 11 oder 12, dadurch gekennzeichnet, daß von dem Gülletank (1) aus eine Rohrleitung (10) zu der Mischanlage (2) führt und die Mischanlage (2) über eine weitere Rohrleitung (11) mit dem Zufuhrrohrstrang (19) des Gewächshauses (4) in Verbindung steht.

14. Anlage nach wenigstens einem der Ansprüche 11 bis 13, dadurch gekennzeichnet, daß am Ende des Abfuhrrohrstranges (24) eine Kläranlage (27) vorgesehen ist.

15. Anlage nach wenigstens einem der vorhergehenden Ansprüche, dadurch gekennzeichnet, daß die Kläranlage (27) als Biokläranlage, insbesondere als Biotop zur Jungpflanzenanzucht ausgebildet ist.

16. Anlage nach wenigstens einem der Ansprüche 11 bis 15, dadurch gekennzeichnet, daß ein Sauerstofftank (3) vorgesehen ist, von dem aus eine Rohrleitung (6) zu einer in dem Gülletank (1) angeordneten Rohrschlange (5) führt, die mit Austrittsöffnungen für den Austritt des Sauerstoffs in die Gülle versehen ist.

17. Anlage nach wenigstens einem der Ansprüche 11 bis 16, dadurch gekennzeichnet, daß die Austrittsöffnungen in der Rohrschlange (5) nur nach außen hin, somit in Richtung in die Gülle öffnen, in umgekehrter Richtung jedoch schießen.

18. Anlage nach wenigstens einem der Ansprüche 11 bis 17, dadurch gekennzeichnet, daß in dem Gülletank (1) ein wasserdurchflossener Wärmeaustauscher (7) vorgesehen ist und das erhitzte Wasser über wenigstens ein Heizungsrohr (9) in das Gewächshaus (4) geführt ist und daß von dem Heizungsrohr (29,30) aus Abzweigrohre (31) für die Beheizung der Nährlösung in den Beeten (15,16) vorgesehen sind.

Fig.:1

# Fig.:2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 639 993 (SIEDENBURG) <br> * Ansprüche 1,3,4 * | 1 | C 02 F 3/32 |
| A | WATER RESEARCH, Band 17, Nr. 4, 1983, Seiten 415-422; C.M. FINLAYSON et al.: "Testing the potential of aquatic plants to treat abattoir effluents" <br> * Zusammenfassung; Seite 417, rechte Spalte, Zeilen 21-23; Seite 421, rechte Spalte, Schluszfolgerungen * | 1 | |
| A | JOURNAL WPCF, Band 60, Nr. 7, Juli 1988, Seiten 1253-1258; J. ZIRSCHKY et al.: "The use of duckweed for wastewater treatment" <br> * Zusammenfassung * | 1,5 | |
| A | US-A-4 169 050 (SERFLING) <br> * Zusammenfassung; Anspruch 4 * | 1 | |
| A | US-A-4 872 985 (DINGES) <br> * Zusammenfassung * | 1 | RECHERCHIERTE SACHGEBIETE (Int. Cl.5) |
| A | FR-A-2 399 384 (VAROSEPITESI TUDOMANYOS ES TERVEZO) | 1 | C 02 F |

Der vorliegende Recherchenbericht wurde für alle Patentansprüche erstellt

| Recherchenort | Abschlußdatum der Recherche | Prüfer |
|---|---|---|
| DEN HAAG | 04-10-1990 | KASPERS H.M.C. |